# EUROPÄISCHE PATENTANMELDUNG

(11) **EP 4 349 611 A1**
(43) Veröffentlichungstag der Anmeldung: **10.04.2024**
(21) Anmeldenummer: 23020453.9
(22) Anmeldetag: 29.09.2023
(51) Int. Cl.: B42D 25/324, B42D 25/351, B42D 25/364, B42D 25/369, B42D 25/382

(54) **SICHERHEITSELEMENT MIT EINEM MASCHINENLESBAREN CODE SOWIE VERFAHREN ZUR ECHTHEITSPRÜFUNG DESSELBEN**

(30) Priorität: 04.10.2022 DE 102022003656
(71) Anmelder: Giesecke+Devrient Currency Technology GmbH, 81677 München (DE)
(72) Erfinder: Schmitz, Christian, 83703 Gmund am Tegernsee (DE)
(74) Vertreter: Giesecke+Devrient IP

(57) **Zusammenfassung**

Die Erfindung betrifft ein Sicherheitselement 10, vorzugsweise in Form eines Sicherheitsstreifens 10c, Sicherheitsfadens 10a, 10b oder Sicherheitspatches 10d, mit einer maschinenlesbaren Codierung, die auf im infraroten Spektralbereich absorbierenden Substanzen basiert S1, S2, S21, wobei die maschinenlesbare Codierung erste und zweite Codebereiche C1, C2 umfasst, die voneinander räumlich getrennt angeordnet sind. Es wird vorgeschlagen, dass die im infraroten Spektralbereich absorbierenden Substanzen S1, S2, S21 zumindest eine erste Substanz S1, die mittels Magnetfeldmessung nicht erfassbar ist, und zumindest eine zweite Substanz S2, S21, die mittels Magnetfeldmessung erfassbar ist, umfassen, wobei die zumindest eine erste Substanz 51 in zumindest einem der ersten Codebereiche C1 und die zweite Substanz S2, S21 in zumindest einem der zweiten Codebereiche C2 eingebracht sind. Die Erfindung betrifft ferner ein Verfahren zur Echtheitsüberprüfung eines derartigen Sicherheitselements 10.

## Beschreibung

Die vorliegende Erfindung betrifft ein Sicherheitselement, vorzugsweise in Form eines Folienstreifens, Folienfadens oder Folienpatches, mit einem maschinenlesbaren Code sowie ein Verfahren zur Herstellung eines solchen Sicherheitselements.

Wertdokumente werden typischerweise zum Schutz vor Fälschungen mit Sicherheitselementen versehen, die Sicherheitsmerkmale mit visuell und/oder maschinell verifizierbaren Eigenschaften implementieren, anhand derer die Echtheit des Wertdokumentes überprüft werden kann. Hierzu sind im Stand der Technik verschiedene Sicherheitsmerkmale bekannt, die sich insbesondere hinsichtlich der technischen Mittel unterscheiden, mit denen das Sicherheitsmerkmal nachweisbar bzw. verifizierbar ist.

Von besonderer Bedeutung sind visuelle Sicherheitsmerkmale mit optisch variablen Eigenschaften, bei denen also das Erscheinungsbild des visuellen Sicherheitsmerkmals je nach Betrachtungswinkel variiert. Bei kontinuierlicher Veränderung des Betrachtungswinkels kann so insbesondere ein Kipp- und/oder Bewegungseffekt visualisiert werden. Derartige Sicherheitsmerkmale gelten als sehr fälschungssicher, da der vom Betrachtungswinkel abhängige, optisch variable Effekt im Allgemeinen für einen Fälscher nicht mit hinreichender Präzession erfasst werden kann, um diesen nachzuahmen. Zudem können derartige optisch variable Effekte nicht durch reguläre Druckprozesse erzeugt werden. Beispiele für optisch variable Sicherheitsmerkmale sind etwa Moire-Magnifier, Kippbilder, Hologramme und Dünnschichtelemente.

Die Echtheit von Wertdokumenten sollte nicht nur visuell, sondern auch maschinell prüfbar sein. Maschinelle Prüfbarkeit bietet ein hohes Sicherheitsniveau und ist in vielen technischen Anwendungsfällen sogar zwingend erforderlich, beispielweise bei der Banknotenbearbeitung. Geräte wie automatische Zählmaschinen und Verkaufsautomaten sollten Denominationen erkennen und/oder die Echtheit einer Banknote überprüfen können.

Bekannte Sicherheitsfäden und/oder Folienelemente mit visuellen, insbesondere optisch variablen, Sicherheitsmerkmalen weisen keine wirkungsvolle Maschinenlesbarkeit auf. Aus der WO 2021/078407 A1 ist lediglich bekannt, derartige Sicherheitselemente mit Kodierungen zu versehen, die auf im Infraroten absorbierenden Substanzen basieren.

Magnetische Substanzen bzw. Druckfarben mit magnetischen Pigmenten, wie etwa für den Intaglio-Druck bzw. Tiefdruck aus EP 2 417 207 B1 bekannt, sind im Allgemeinen sowohl im Auflicht als auch im Durchlicht gut sichtbar, sodass diese das optische Erscheinungsbild von visuellen, insbesondere optisch variablen, Sicherheitsmerkmalen stören können.

Insofern besteht Bedarf an einem Sicherheitselement mit einem maschinenlesbaren Code, welcher fälschungssicher ist und zuverlässig auf Echtheit geprüft werden kann.

Die vorliegende Erfindung löst diese Aufgabe durch die angegebenen unabhängigen Ansprüche. Bevorzugte Ausführungsformen der Erfindung sind in den davon abhängigen Ansprüchen angegeben.

Gemäß einem ersten Aspekt der vorliegenden Erfindung wird ein Sicherheitselement, vorzugsweise in Form eines Sicherheitsstreifens (auch: Folienstreifen), Sicherheitsfadens (auch: Folienfaden) oder Sicherheitspatches (auch: Folienpatch), mit einer maschinenlesbaren Codierung bereitgestellt, die auf im infraroten Spektralbereich absorbierenden Substanzen basiert. Die maschinenlesbare Codierung umfasst erste und zweite Codebereiche, die voneinander räumlich getrennt angeordnet sind. Die für die erfindungsgemäße, maschinenlesbare Codierung vorgesehenen, im infraroten Spektralbereich absorbierenden Substanzen umfassen zumindest eine erste Substanz, die mittels Magnetfeldmessung nicht erfassbar ist, und zumindest eine zweite Substanz, die mittels Magnetfeldmessung erfassbar ist. Die zumindest eine erste Substanz ist in zumindest einem der ersten Codebereiche eingebracht und die zweite Substanz ist in zumindest einem der zweiten Codebereiche eingebracht.

Mit anderen Worten wird vorgeschlagen, eine magnetische Codierung mit Hilfe von unterschiedlichen ersten und zweiten Substanzen, beispielsweise entsprechenden Druckfarben, zu erzeugen, die eine magnetisch erfassbare Komponente (auch magnetische Codierung) und eine anhand des Absorptionsverhalten im infraroten Spektralbereich (IR) erfassbare Komponente (auch: IR-Codierung) umfasst.

Als optisch sichtbarer Wellenlängenbereich wird im Zusammenhang mit dieser Offenbarung insbesondere der Wellenlängenbereich in einem Bereich von 400 nm bis 700 nm angesehen. Der Wellenlängenbereich von zumindest 700 nm wird im Rahmen dieser Beschreibung insbesondere als Infrarotbereich bezeichnet.

Die ersten und zweiten Substanzen sind beispielsweise als Pigmente von Druckfarben in erste und zweite Codebereiche, beispielsweise als Teil eines Positiv- oder Negativdrucks, eingebracht, die in Aufsicht auf das Sicherheitselement sichtbar sind und ein visuell erfassbares Sicherheitsmerkmals darstellen.

Die verwendeten ersten und/ oder zweiten Substanzen erzeugen vorzugsweise charakteristische IR-Signaturen, also Absorptionsspektren, die zur eindeutigen Zuordnung der betreffenden ersten und/oder zweiten Substanz herangezogen werden können. Hierzu kann insbesondere die spektrale Lage von charakteristischen Absorptionsmaxima oder -minima überprüft werden, wobei breitbandig absorbierende erste und/oder zweite Substanzen bevorzugt sind.

Die verwendeten zweiten Substanzen erzeugen zusätzlich mittels Magnetfeldmessung erfassbare Signaturen, die beispielsweise durch magnetische oder magnetisierbare Pigmente entsprechender Druckfarben, wie etwa aus EP 2 417 207 B1 bekannt, bereitgestellt werden können.

Eine Magnetfeldmessung im Sinne dieser Beschreibung beinhaltet die Bestimmung eines magnetischen Feldes, einer magnetischen Flussdichte, einer Magnetisierung, einer Remanenz, einer Koerzitivität und/ oder einer Hysterese. Zum Nachweis werden magnetische Eigenschaften der zweiten Substanzen bzw. deren Verteilung beispielsweise mit Hilfe gängiger Magnetsensoren nachgewiesen.

Die ersten und/ oder zweiten Substanzen, deren Nachweis zumindest zum Teil auf dem jeweiligen Absorptionsverhalten im infraroten Spektralbereich (IR) beruht, sind bevorzugt IR-absorbierende Pigmente der Firma SICPA (SICPA SA, AVE de Florian 41, 1008, Prilly, Schweiz), wie etwa unter dem Handelsnamen SICPATALK^{®} vertriebene Druckfarben.

Das Sicherheitselement dient vorzugsweise zur Erhöhung der Fälschungshürde eines Wertdokuments. Unter Wertdokumenten sind insbesondere Banknoten, Aktien, Ausweisdokumente, Kreditkarten, Urkunden, Versichertenkarten und allgemein fälschungsgefährdete, mit Werten versehene oder assoziierte Dokumente zu verstehen, beispielsweise auch Produktsicherungselemente wie Etiketten und Verpackungen für hochwertige Produkte oder dergleichen. Der Begriff "Wertdokument" umfasst im Rahmen dieser Beschreibung nicht nur fertiggestellte, umlauffähige Wertdokumente, sondern auch Vorstufen solcher Wertdokumente, wie etwa Sicherheitspapiere, die nicht alle Merkmale eines umlauffähigen Wertdokuments besitzen, beispielsweise auch Sicherheitspapiere in Bogen- oder Rollenform.

Die Sicherheitselemente weisen beispielsweise Folienelemente in Form von Fäden, Streifen oder Patches auf, die auf ein Wertdokument aufgebracht oder in ein Wertdokument zumindest teilweise eingebracht werden, wie beispielsweise Fenstersicherheitsfäden und Pendelsicherheitsfäden, die verwendet werden, um durchgehende Öffnungen in einem Wertdokument abzudecken.

Der Nachweis bzw. die Überprüfung der magnetischen Codierung beinhaltet den Nachweis der ersten und zweiten Substanzen in den ersten und zweiten Codebereichen anhand von Magnetfeldmessungen und Überprüfung des Absorptionsverhaltens im infraroten Spektralbereich, beispielsweise unter IR-Beleuchtung. Die Echtheitsüberprüfung des Sicherheitselements, insbesondere hinsichtlich einer Verteilung von ersten und zweiten Substanzen in den ersten und zweiten Codebereichen, umfasst beispielsweise die Bestimmung von Absorptionscharakteristika im infrarotem Spektralbereich. Hinsichtlich der Verteilung der zweiten Substanzen in den zweiten Codebereichen beruht die Echtheitsüberprüfung zumindest teilweise auf einer Magnetfeldmessung.

Im Vergleich zu Sicherheitselementen mit Codierungen, die lediglich auf im infraroten Spektralbereich absorbierenden Substanzen beruhen, stellt die zusätzliche magnetische Codierung eine erhöhte Fälschungshürde dar.

In bevorzugten Ausgestaltungen ist zumindest eine weitere, zweite im Infraroten absorbierende Substanz, die mittels Magnetfeldmessung erfassbar ist, in zumindest einem der zweiten Codebereiche eingebracht. Die zumindest eine zweite Substanz und die zumindest eine weitere zweite Substanz unterscheiden sich hinsichtlich ihrer magnetischen Eigenschaften, insbesondere hinsichtlich der Koerzitivität. Die zweiten Codebereiche sind beispielsweise von zweiten Substanzen gebildet, die sich hinsichtlich ihrer magnetischen Koerzitivität unterscheiden und beispielsweise Bereiche niedriger und/oder hoher Koerzitivität in Form einer magnetischen Codierung bereitstellen.

In beispielhaften Ausgestaltungen werden als zweite Druckfarben zwei oder mehrere Druckfarben verwendet, deren magnetische Pigmente sich hinsichtlich ihrer magnetischen Koerzitivität unterscheiden. In diesem Fall sind die zweiten Codebereiche durch Bereiche mit hoher magnetischer Koerzitivität und Bereiche mit niedriger magnetischer Koerzitivität charakterisiert (sogenannte HiCoLoCo-Magnetcodierung).

In bevorzugten Ausgestaltungen ist vorgesehen, dass sich die zumindest eine zweite Substanz und die zumindest eine weitere zweite Substanz in zumindest einem der zweiten Codebereiche überlagern bzw. sich überlagernd eingebracht sind, insbesondere in Form eines Gemisches aus den beiden Substanzen. Auf diese Weise kann beispielsweise ein zweiter Codebereich gebildet werden, in dem eine Kombination von Substanzen unterschiedlicher magnetischer Koerzitivität eingebracht sind.

Vorzugsweise sind in jedem der ersten Codebereiche die zumindest eine erste Substanz oder eine der ersten Substanzen als IR-absorbierende und magnetisch nicht nachweisbare Substanz eingebracht.

In bevorzugten Ausgestaltungen kodieren die ersten und zweiten Codebereiche eine Information in Form von Bits in der Art eines Barcodes, die in Ausgestaltungen beispielsweise eine Denominationserkennung ermöglichen.

In möglichen Ausgestaltungen sind die ersten und/ oder zweiten Codebereiche visuell sichtbar am Sicherheitselement angeordnet und bilden beispielsweise ein visuelles Sicherheitsmerkmal. Die ersten, zweiten und/ oder weiteren zweiten Substanzen sind in derartigen Ausgestaltungen visuell erfassbar und erzeugen vorzugsweise zu einer Buntfarbe korrespondierende Farbeindrücke.

In Weiterbildung ist eine zusätzliche, visuell erfassbare Codierung vorgesehen, welche auf zumindest einer dritten Substanz basiert, die im infraroten Spektralbereich transparent ist und einen visuell erfassbaren, zu einer Buntfarbe korrespondierenden Farbeindruck erzeugt. Die dritte Substanz ist in sichtbar angeordneten, dritten Codebereichen eingebracht, die von den ersten und zweiten Codebereichen räumlich getrennt angeordnet sind. Vorzugsweise enthält die dritte Substanz keine Bestandteile, die mittels Magnetfeldmessung nachweisbar wären, sodass die dritten Codebereiche eine weitere, visuell erfassbare Sicherheitsebene implementieren, beispielsweise als Teil eines optisch variablen Sicherheitsmerkmals.

Bevorzugt sind die ersten, zweiten und/oder dritten Codebereiche innerhalb des Sicherheitselements von einer mikrooptischen Reliefanordnung, insbesondere Mikrolinsenanordnung, eines optisch variablen Sicherheitsmerkmals überlagert angeordnet, um insbesondere die ersten und/oder zweiten Codebereiche vor mechanischem Abrieb zu schützen.

Weiter bevorzugt sind die ersten, zweiten und/oder dritten Codebereiche derart angeordnet, dass diese von der mikrooptischen Reliefanordnung, insbesondere von der Mikrolinsenanordnung, als Teil eines optisch variablen Sicherheitsmerkmals abbildbar sind.

In möglichen Ausgestaltungen sind die zweiten Codebereiche, in denen magnetisch nachweisbare zweite Substanzen eingebracht sind, von einer opaken Farbschicht überlagert, die im infraroten Spektralbereich transparent ist. Auf diese Weise kann insbesondere die Lage der zweiten Codebereiche im visuellen Erscheinungsbild kaschiert werden und gleichermaßen eine hinreichende Maschinenlesbarkeit sichergestellt werden.

In anderen Ausgestaltungen sind die ersten und/ oder zweiten Codebereiche von einer Flüssigkristallschicht eines optisch variablen Sicherheitsmerkmals überlagert. Die Flüssigkristallschicht weist in beispielhaften Ausgestaltungen in an sich bekannter Weise einen vom Betrachtungswinkel abhängigen Farbkippeffekt auf.

In derartigen Ausführungsbeispielen sind bevorzugt die ersten und/oder zweiten Codebereiche in einer opaken, insbesondere schwarzen Deckfarbschicht eingebettet, die von der Flüssigkristallschicht überlagert ist. Die Deckfarbschicht mit den darin eingebetteten ersten und/oder zweiten Codebereichen bildet bevorzugt einen dunklen Untergrund zur Darstellung des von der Flüssigkristallschicht vermittelten, optisch variablen Effekts.

In hierzu alternativen Ausgestaltungen sind die ersten und zweiten Codebereiche auf einer die Deckfarbschicht tragenden Trägerschicht aufgebracht, wobei die opake, insbesondere schwarze Deckfarbschicht von der Flüssigkristallschicht überlagert ist.

Alternativ ist die opake, insbesondere schwarze Deckfarbschicht von der Flüssigkristallschicht überlagert, wobei die ersten Codebereiche in der Deckfarbschicht eingebettet sind, und die zweiten Codebereiche auf einer die Deckfarbschicht tragenden Trägerschicht angeordnet, auf der die zweiten Codebereiche aufgebracht sind.

Bei einem Verfahren zur Echtheitsprüfung eines Sicherheitselements, insbesondere des vorstehend beschriebenen Sicherheitselements, wird anhand einer Erfassung einer Absorption im infraroten Spektralbereich eine IR-Codierung bestimmt, die durch die Verteilung der ersten und zweiten Substanzen in den ersten und zweiten Codebereichen charakterisiert ist. Anhand einer Magnetfeldmessung wird weiter eine magnetische Codierung bestimmt, die durch die Verteilung der zweiten Substanzen in den zweiten Codebereichen charakterisiert ist. Die Echtheit des Sicherheitselements wird anhand der erfassten IR-Codierung und der magnetischen Codierung überprüft, um eine erhöhte Fälschungshürde darzustellen.

Weitere Aspekte, Merkmale und Vorteile der vorliegenden Erfindung werden anhand der nachfolgenden detaillierten Beschreibung von bevorzugten Ausführungsformen und Ausführungsvarianten mit Bezug auf die beiliegenden Figuren deutlich werden, welche zeigen:
- Fig. 1: ein Wertdokument mit Sicherheitselementen gemäß möglichen Ausführungsformen der Erfindung in Aufsicht;
- Figs. 2a bis 2c: ein Sicherheitselement mit einer maschinenlesbaren Codierung gemäß einer möglichen Ausführung der Erfindung, in Aufsicht;
- Figs. 3a bis 3c: ein Sicherheitselement mit einer maschinenlesbaren Codierung gemäß einer weiteren möglichen Ausführung der Erfindung, in Aufsicht;
- Fig. 4: ein Sicherheitselement mit einem optisch variablen Sicherheitsmerkmal und einer maschinenlesbaren Codierung gemäß einer weiteren möglichen Ausführung der Erfindung, in einer schematischen Querschnittsdarstellung;
- Fig. 5: ein weiteres Sicherheitselement mit einem optisch variablen Sicherheitsmerkmal in einer schematischen Querschnittsdarstellung;
- Figs. 6a bis 6c: Ausführungsbeispiele von Sicherheitselementen mit einem eine Flüssigkristallschicht umfassenden, optisch variablen Sicherheitsmerkmal;
- Fig. 7: schematisch ein Verfahren zur Echtheitsprüfung eines der vorstehend beschriebenen Sicherheitselemente.

Anhand der Zeichnungen, die spezifische Ausführungsbeispiele der Erfindung illustrieren, wird die Erfindung nachfolgend beispielhaft erläutert. Diese Ausführungsbeispiele werden detailliert beschrieben und ermöglichen dem Fachmann die technische Umsetzung der Erfindung. Die beschriebenen Ausführungsformen schließen sich nicht gegenseitig aus, sondern ergänzen sich vielmehr. Insofern ist ein bestimmtes Merkmal, eine bestimmte Struktur oder eine bestimmte Eigenschaft, die im Zusammenhang mit einer Ausführungsform beschrieben wird auch im Zusammenhang mit anderen Ausführungsformen umsetzbar, ohne vom Gegenstand der Erfindung abzuweichen. Ferner kann die Position oder Anordnung einzelner Elemente oder Schritte innerhalb der beschriebenen Ausführungsformen selbstverständlich modifiziert werden, ohne vom Gegenstand der Erfindung abzuweichen. Deshalb ist die nachfolgende Beschreibung der anliegenden Figuren nicht beschränkend zu verstehen, denn der Umfang der Erfindung wird ausschließlich durch die beigefügten Ansprüche definiert und umfasst auch Varianten und Äquivalente, die nachfolgend nicht ausdrücklich beschrieben werden.

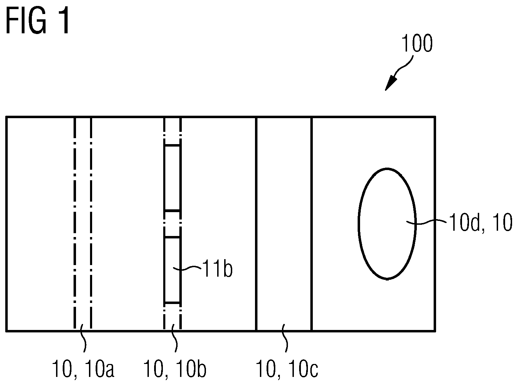

Fig. 1 zeigt in einer schematischen Aufsicht ein Wertdokument 100, welches mit unterschiedlichen Sicherheitselementen 10 versehen ist, die vorzugsweise in definierter Lage, insbesondere registergenau, zueinander und mit Bezug auf das Wertdokument 100 angeordnet sind. Gezeigt sind Sicherheitselemente 10, die beispielhaft als Sicherheitsfaden 10a, Fenster-Sicherheitsfaden 10b, Sicherheitsstreifen 10c oder Sicherheitspatch 10d ausgeführt sind. Bei dem in Fig. 1 gezeigten Wertdokument 100 handelt es sich beispielsweise um eine Banknote mit einem Substrat aus (Baumwoll-)Papier, in welches der Sicherheitsfaden 10a eingebettet ist. Bei dem in Fig. 1 gezeigten Wertdokument 100 kann es sich auch um eine Banknote mit Polymersubstrat, insbesondere auf Basis von Polyethylen und/oder Polypropylen, bzw. um eine Folienverbundbanknote handeln.

Der Sicherheitsfaden 10b ist ein sogenannter Fensterfaden, der so in das Substrat des Wertdokuments 100 eingebettet ist, dass dieser abwechselnd auf gegenüberliegenden Seiten des Wertdokuments 100 in Fenstern 11b sichtbar zu Tage tritt.

Fig. 1 zeigt eine Vielzahl von unterschiedlichen Sicherheitselementen 10, 10a, 10b, 10c, 10d, die nicht notwendigerweise in der dargestellten Gänze realisiert sein müssen. Es versteht sich, dass bereits ein einzelnes Sicherheitselement 10 ein hinreichend fälschungssicheres Sicherheitsmerkmal für das Wertdokument 100 bereitstellen kann. In bevorzugten Ausgestaltungen können mehrere Sicherheitselemente 10, beispielsweise eine beliebige Kombination der in Fig. 1 gezeigten Sicherheitselemente 10a, 10b, 10c, 10d vorgesehen werden, um die Fälschungssicherheit zu erhöhen.

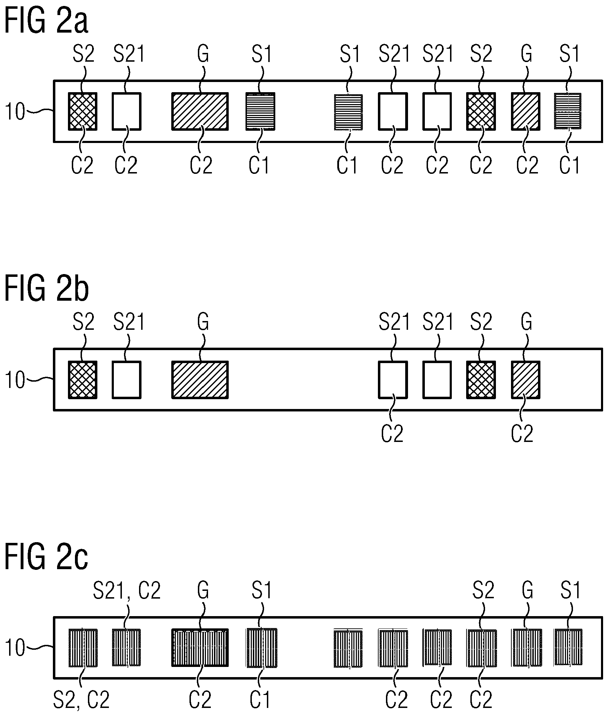

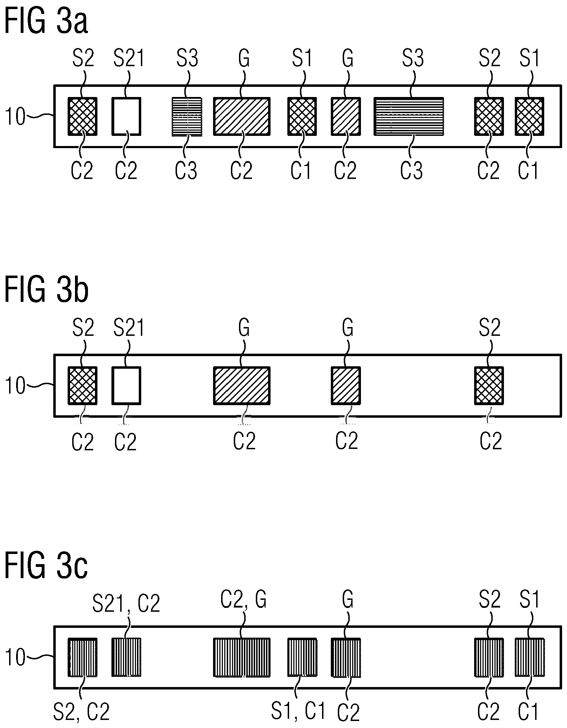

Die Sicherheitselemente 10 sind mit einer maschinenlesbaren Codierung versehen, welche drucktechnisch in Codebereiche C1, C2, C3 durch dort zumindest bereichsweise ein- oder aufgebrachte opake Druckfarben realisiert ist. Exemplarische Ausgestaltungen solcher Sicherheitselemente 10 illustrieren die Fig. 2 und 3 in Aufsicht.

Bei den in den Fig. 2 und 3 illustrierten Ausführungsbeispielen bildet die maschinenlesbare Codierung in Aufsicht ein ein- oder mehrfarbiges Muster in Form eines Strich- oder Barcodes, welche auf im infraroten Spektralbereich (IR) absorbierende erste und zweite Substanzen basiert, beispielsweise IR-absorbierende Pigmente entsprechender Druckfarben, die in erste und zweite Codebereiche C1, C2 des Sicherheitselementes 10 ein- oder aufbracht sind.

Die ersten und zweiten Codebereiche C1, C2 bilden sichtseitig jeweils Blöcke, die räumlich voneinander getrennt angeordnet bzw. voneinander beabstandet sind. Die ersten Codebereiche C1 sind mit einer ersten Substanz S1 bedruckt, die im infraroten Spektralbereich absorbierend ist und entsprechend anhand ihres Absorptionsverhaltens im Infraroten nachweisbar ist. Die erste Substanz S1 enthält jedoch keine magnetischen oder magnetisierbaren Bestandteile, die mittels Magnetfeldmessung nachweisbar sind, wohingegen zweite Substanzen S2, die in den zweiten Codebereichen C2 ein- oder aufgebracht sind, sowohl anhand ihres Absorptionsverhaltens im infraroten Spektralbereich als auch anhand ihrer magnetischen Eigenschaften mittels Magnetfeldmessung nachweisbar sind.

Figs. 2a bis 2c zeigen ein Ausführungsbeispiel, bei dem zusätzlich eine weitere, insbesondere magnetisierbare zweite Substanz S21 vorgesehen ist, die in einigen der zweiten Codebereiche C2 eingebracht ist. Die weitere zweite Substanz S21 unterscheidet sich von der zweiten Substanz S2 hinsichtlich ihrer magnetischen Eigenschaften. Im dargestellten Beispiel werden zwei verschiedene Sorten von magnetischen Pigmenten entsprechender Druckfarben verwendet, die als zweite Substanzen S2, S21 in die zweiten Codebereiche eingebracht sind und sich hinsichtlich ihrer Koerzitivität unterscheiden. Die zweite Substanz S2 korrespondiert mit einer niedrigen Koerzitivität bzw. Koerzitivfeldstärke, die weitere zweite Substanz S21 mit einer hohen Koerzitivität bzw. Koerzitivfeldstärke. Mit anderen Worten kodieren die zweiten Codebereiche S2, S21 Bereiche hoher und niedriger Koerzitivität in Form einer sogenannten HiCoLoCo-Magnetcodierung. Dabei sind die zweiten Substanzen S2, S21 in einigen der zweiten Codebereiche C2 kombiniert eingebracht. Diese Codebereiche C2 sind entsprechend mit einem Gemisch G aus den zweiten Substanzen S2, S21 (zweite Substanz und weitere zweite Substanz) bedruckt und kodieren entsprechend magnetisch auslesbare Codebereiche.

Fig. 2a illustriert schematisch eine exemplarische Anordnung von ersten und zweiten Codebereichen C1, C2 in Aufsicht auf das Sicherheitselement 10, welches beispielsweise als Sicherheitsfaden 10a, 10b ausgeführt ist. Die Codebereiche C1, C2 bilden sichtseitig ein ein- oder mehrfarbiges Muster von Blöcken. Insbesondere zur Darstellung von mehrfarbigen Motiven oder Symbolen ist vorgesehen, unterschiedliche erste und/oder zweite Substanzen S1, S2, S21 zu verwenden, die unterschiedliche Farbpigmente aufweisen. Hierzu können insbesondere auch unterschiedliche nicht-magnetische, erste Substanzen S1 vorgesehen werden, die im visuell wahrnehmbaren Spektralbereich zu unterschiedlichen Buntfarben, beispielsweise Rot, Grün, Blau, Weiß und/oder Schwarz, korrespondieren.

Fig. 2b zeigt schematisch die magnetische Codierung des Sicherheitselements 10 der Fig. 2a während einer Magnetfeldmessung. Da die erste Substanz S1 bzw. die ersten Substanzen S1 keine magnetisch nachweisbare Komponenten hat/haben, tragen die entsprechend kodierten, ersten Codebereiche C1 zu der magnetisch auslesbaren Codierung nicht bei. Magnetisch nachweisbar sind die zweiten Codebereiche C2 entsprechend den Bereichen niedriger oder hoher Koerzitivität oder entsprechend Kombinationsbereichen, in denen zweite Substanzen S2, S21 mit unterschiedlicher magnetischer Koerzitivität eingebracht sind.

Fig. 2b illustriert schematisch eine weitere Sicherheitsebene im Vergleich zu der in Fig. 2a gezeigten sichtbaren Anordnung von Codebereichen C1, C2, wobei die magnetisch erfassbaren zweiten Codebereiche C2 hinsichtlich ihrer magnetischen Eigenschaften, insbesondere ihrer Koerzitivität unterscheidbar sind und somit eine Komponente (auch: magnetische Codierung) einer maschinenlesbaren Codierung darstellen.

Fig. 2c illustriert schematisch das Absorptionsverhalten des Sicherheitselements 10 der Fig. 2a in Aufsicht beispielsweise unter Beleuchtung mit Infrarotstrahlung. Da sowohl die ersten als auch die zweiten Substanzen S1, S2, S21 im infraroten Spektralbereich (IR) absorbierend sind, tragen alle ersten und zweiten Codebereiche C1, C2 zu einer weiteren Komponente (auch: IR-Codierung) der maschinenlesbaren Codierung bei, die anhand von Signaturen im IR-Absorptionsspektrum erfassbar bzw. verifizierbar ist.

In Ausgestaltungen, in denen mehrere erste Substanzen S1 und/ oder zweite Substanzen S2 und/ oder weitere zweite Substanzen vorgesehen sind, können diese insbesondere anhand ihres charakteristischen Absorptionsverhaltens im Infrarotem unterschieden werden. Dies ermöglicht die Ausgestaltung von Sicherheitselementen 10 mit maschinenlesbaren Codierungen, die insbesondere, wie etwa in Figs. 2a bis 2c illustriert, auf unterschiedlichen Sicherheitsebenen miteinander korreliert sind. Hierbei ist insbesondere die Ausgestaltung von Multicodes ermöglicht, die entsprechend eine visuell erfassbare Codierung (Fig. 2a), eine mittels Magnetfeldmessung erfassbare Codierung (Fig. 2b) und eine weitere Codierung (Fig. 2c) bereitstellt, die von dem Absorptionsverhalten der in den Codebereichen C1, C2 eingebrachten Substanzen charakterisiert ist.

Für Sicherheitselemente 10, wie etwa Sicherheitsfäden 10a, 10b oder Sicherheitsstreifen 10c, wird eine maschinenlesbare Codierung anhand der magnetisch auslesbaren zweiten Codebereiche C2 bereitgestellt, die entsprechend einer möglichen Ausgestaltung von lediglich einer zweiten Substanz mit niedriger magnetischer Koerzitivität (so genannte LoCo-Codierung, LoCo-Bits oder LoCo-Bereiche) erzeugt werden. Alternativ dazu umfassen die zweiten Codebereiche C2 solche mit niedriger und/ oder hoher magnetischer Koerzitivität (so genannte HiCo-Codierung, HiCo-Bits oder HiCo-Bereiche) und/ oder mit einer Kombination aus niedriger und hoher Koerzitivität, entsprechend einem Gemisch G aus mittels Magnetfeldmessung nachweisbaren zweiten Substanzen S2, S21.

Vorzugsweise wird zumindest eine Buntfarbe, die durch die magnetisch nicht erfassbare, im Infraroten absorbierende erste Substanz S1 gegeben ist, in die maschinenlesbare Codierung integriert. Diese Buntfarbe ist besonders bevorzugt Schwarz. Mittels Magnetfeldmessung bzw. mit Hilfe von gängigen Magnetsensoren ist die magnetische Codierung erfassbar und auslesbar. Unter infraroter Beleuchtung ist mittels Infrarotsensoren ein Gesamtcode erfassbar, der durch die ersten und zweiten Codebereiche C1, C2, in denen im infraroten Spektralbereich absorbierende, erste und zweite Substanzen S1, S2, S21 eingebracht sind, bestimmt ist.

Die maschinenlesbare Codierung wird beispielsweise in Form eines Drucks von Druckfarben mit magnetisierbaren und nicht magnetisierbaren Pigmenten bereitgestellt, insbesondere als Druck von zu den Substanzen S1, S2, S21 korrespondierenden Druckfarben, beispielsweise auf einem Kunststoffträger des Sicherheitselements 10, wie etwa eine Polyethylenterephthalat(PET-) Folie. Geeignete Druckfarben sind beispielsweise aus EP 2 417 207 B1 bekannt.

Bei der in Figuren 2a bis 2c gezeigten Ausführung entspricht die Anzahl der visuell sichtbaren ersten und zweiten Codebereiche C1, C2 (Fig. 2a) der Anzahl der anhand der Absorptionscharakteristik im Infraroten erfassbaren Codebereiche C1, C2 (Fig. 2c).

Zusammengefasst ist eine besondere, in den Figuren 2a bis 2c gezeigte Ausführungsform dergestalt, dass die Codebereiche C1, C2, C3 bei Tageslicht mittels Sensoren optisch als Code erfasst werden können, während mittels Magnetfeldmessung nur der Codebereich C2 erkannt wird und unter IR-Beleuchtung die beiden Codebereiche C1 und C2 erkannt werden.

Figuren 3a bis 3c zeigen ein weiteres Ausführungsbeispiel, das weitgehend analog zu der in Figuren 2a bis 2c gezeigten Ausgestaltung ist. Im Gegensatz zu der in Figuren 2a bis 2c gezeigten Ausführung basiert die visuell erfassbare Codierung, wie insbesondere in Fig. 3a illustriert, auf zumindest einer weiteren nicht-magnetisierbaren dritten Substanz S3, die im infraroten Spektralbereich transparent ist und einen visuell erfassbaren, zu einer Buntfarbe korrespondierenden Farbeindruck erzeugt. Hierzu ist die dritte Substanz S3 in sichtbar angeordneten dritten Codebereichen C3 des Sicherheitselements 10 eingebracht, die von den ersten und zweiten Codebereichen C1, C2 räumlich getrennt angeordnet sind.

Fig. 3b zeigt schematisch die magnetische Codierung des Sicherheitselements 10 der Fig. 3a während einer Magnetfeldmessung. Da die dritte Substanz S3 keine magnetisch nachweisbare Komponente hat, tragen die entsprechend kodierten dritten Codebereiche C3 zu der magnetisch auslesbaren Codierung nicht bei. Magnetisch nachweisbar sind weiterhin lediglich die zweiten Codebereiche C2, die insbesondere mit Bereichen niedriger oder hoher Koerzitivität oder Kombinationsbereichen korrespondieren, in die zweite Substanzen S2, S21 unterschiedlicher magnetischer Koerzitivität eingebracht sind.

Fig. 3c illustriert schematisch das Absorptionsverhalten des Sicherheitselements 10 der Fig. 3a in Aufsicht, beispielsweise unter Beleuchtung mit Infrarotstrahlung. Da die dritte Substanz S3 im infraroten Spektralbereich (IR) im Wesentlichen transparent ist, tragen die dritten Codebereiche C3 zu der Komponente der maschinenlesbaren Codierung nicht bei, die anhand von Signaturen im IR-Absorptionsspektrum erfassbar bzw. verifizierbar ist. Wie insbesondere aus dem Vergleich mit Fig. 3a ersichtlich, entspricht die Anzahl der unter Infrarotlicht erfassbaren Codebereiche C1, C2 nicht der gesamten Anzahl der Codebereiche C1, C2, C3.

Mittels Magnetfeldmessung ist die magnetisch auslesbare Codierung, die von den zweiten Codebereichen C2 bereitgestellt wird, erfassbar und auslesbar. Unter Infrarotbeleuchtung können die im Infraroten absorbierenden ersten und zweiten Codebereiche C1, C2 erfasst und erkannt werden. Die dritten Codebereiche C3 sind unter Beleuchtung mit elektromagnetischer Strahlung im infraroten Wellenlängenbereich nicht sichtbar bzw. nicht nachweisbar. Dies ermöglicht die Implementierung eines maschinenlesbaren Codes, insbesondere zur Echtheitsprüfung von Sicherheitselementen 10, mit einer magnetisch auslesbaren Komponente und einer anhand des IR-Absorptionsverhaltens erfassbaren Komponente, wobei die entsprechenden Komponenten von der Verteilung der ein- oder aufgebrachten ersten, zweiten und/oder dritte Substanzen S1, S2, S21, S3 bestimmt sind.

Die ersten, zweiten und/oder dritten Codebereiche C1, C2, C3 kodieren in beispielhaften Ausführungen eine Information in Form von Bits, beispielsweise zur Denominationserkennung einer mit dem Sicherheitselement 10 versehenen Banknote.

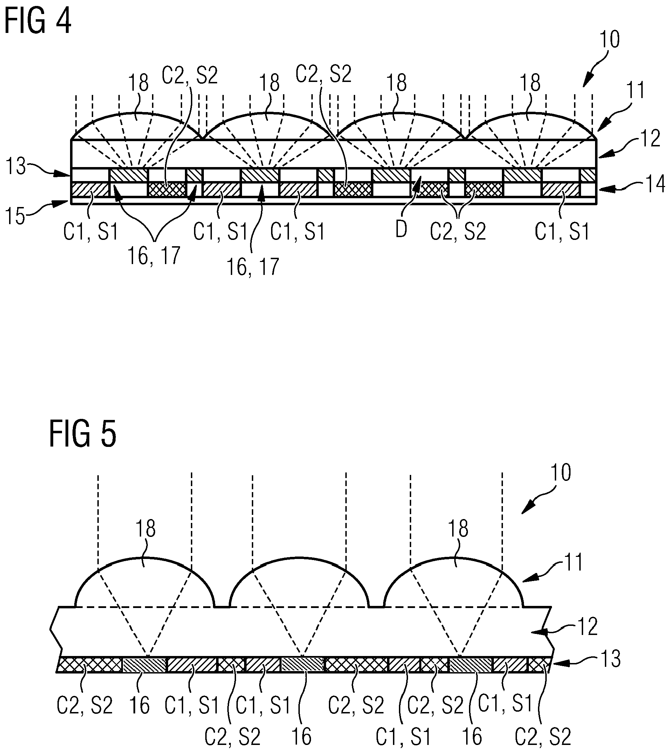

Fig. 4 zeigt ein Sicherheitselement 10 im Querschnitt, welches ein visuell erfassbares, optisch variables Sicherheitsmerkmal entsprechend eines Moire-Magnifiers umfasst. Das Sicherheitselement 10 hat einen mehrschichtigen Aufbau, wobei eine mikrooptische Reliefstruktur 11, die in der exemplarisch gezeigten Ausführung von einer Mikrolinsenanordnung bereitgestellt wird, sichtseitig bzw. in Aufsicht die oberste Schicht bildet. Die dargestellte mikrooptische Reliefstruktur 11 bzw. Mikrolinsenanordnung umfasst eine Vielzahl von Mikrolinsen 18, die auf darunterliegende Bildelemente 16 (auch: Mikrobilder, micro images) fokussiert sind. Bei Betrachtung durch die mikrooptische Reliefstruktur 11 werden die Bildelemente 16 vergrößert oder in anderer Weise optisch verändert, um den optisch variablen Effekt zu erzeugen.

Der Moire-Magnifier der Fig. 4 umfasst ferner eine Abstandhalterschicht 12, die zwischen der Reliefstruktur 11 und einer die Bildelemente 16 enthaltenden Bildschicht 13 angeordnet ist, sowie Funktionsschichten 14, 15. In der Funktionsschicht 14 sind maschinenlesbare Merkmale in Form der vorstehend beschriebenen ersten und zweiten Codebereiche C1, C2 eingebracht. Die weitere Funktionsschicht 15 besteht beispielsweise aus einer Klebstoffschicht zur bestimmungsgemäßen Anbringung des Sicherheitselements 10 an das Wertdokument 100. Die Bildschicht 13 besteht in der dargestellten Ausführungsform aus einem transluzenten oder transparenten Prägelack, in der Mikrovertiefungen 17 eingeprägt sind. Die Mikrovertiefungen 17 bilden die Bildelemente 16 als sogenannte Mikrobilder bzw. Microimages, welche mittels der optischen Reliefstruktur 11 zur Erzeugung des optisch variablen Effekts abbildbar sind.

Die Mikrolinsen 18 und die Bildelemente 16 bilden jeweils eine zweidimensionale Anordnung. Die Bildschicht 13 sowie die mikrooptische Reliefstruktur 11 (Mikrolinsenanordnung) erzeugen das optisch variable Sicherheitsmerkmal. Die in der Funktionsschicht 14 enthaltene, maschinenlesbare Codierung beruht auf dort eingebrachten ersten und zweiten Substanzen S1, S2, die im infraroten Spektralbereich absorbierend sind. Die zweiten Substanzen S2 sind zusätzlich mittels Magnetfeldmessung nachweisbar, die ersten Substanzen S1 jedoch nicht. Optional werden, wie insbesondere in dem Ausführungsbeispiel der Fig. 5 illustriert, zur Codierung weitere, dritte Substanzen S3 verwendet, die im infraroten Spektralbereich transparent sind und auch mittels Magnetfeldmessung nicht nachweisbar sind, und vorzugsweise zu Buntfarben des visuell wahrnehmbaren Spektralbereichs korrespondieren.

Für den Mikrolinseneffekt der in Fig. 4 gezeigten Ausführung sind die abbildbaren Bildelemente 16 maßgeblich und für die maschinenlesbare Codierung entsprechend die Verteilung der ersten, zweiten und ggfs. weiteren zweiten Substanzen S1, S2, S21 in den ersten und zweiten Codebereichen C1, C2. In optionalen Ausgestaltungen deckt eine opake, insbesondere weiße Farbschicht D, welche im Infraroten transparent ist, die mit magnetisch verifizierbaren, zweiten Substanzen S2, S21 versehenen, zweiten Codebereiche C2 ab, sodass die magnetische Codierung vorzugsweise sichtseitig visuell nicht in Erscheinung tritt. In Varianten des dargestellten Ausführungsbeispiels ist die erste Substanz S1 bevorzugt im sichtbaren Spektralbereich transparent. Die zweiten Substanzen S2, S21 entsprechen vorzugsweise einer hellen Buntfarbe, besonders bevorzugt der Buntfarbe Weiß.

Fig. 5 zeigt schematisch den Schichtaufbau eines Sicherheitselements 10, bei dem die Abstandshalterschicht 12 von einer Trägerfolie aus Polyethylenterephthalat gebildet ist. Die mikrooptische Reliefstruktur 11 der Fig. 5 bildet einen Moire-Magnifier für die Bildelemente 16, wobei die maschinenlesbare Codierung in der Bildschicht 13 als Codebereiche C1, C2 integriert ist.

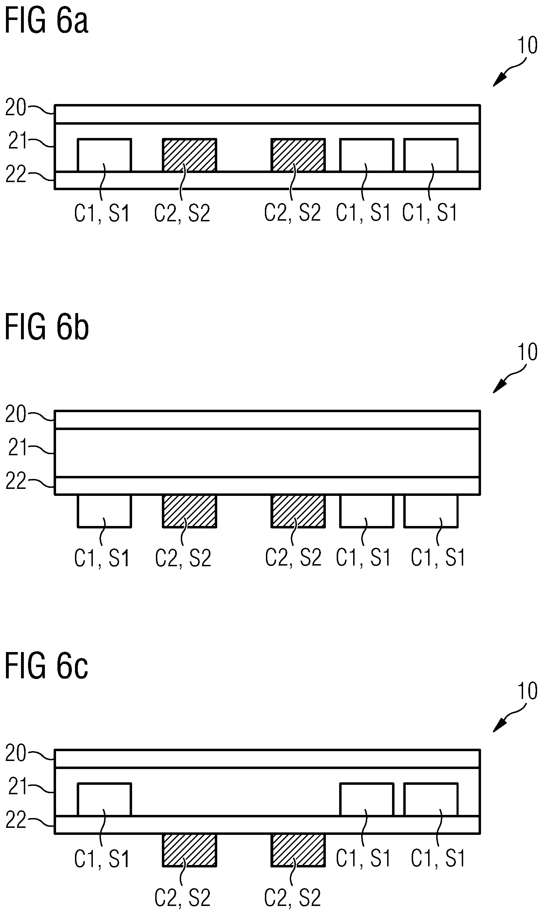

Figs. 6a bis 6c zeigen weitere Ausführungsbeispiele von Sicherheitselementen 10 mit einem optisch variablen Sicherheitsmerkmal, welches eine Flüssigkristallschicht 20 aufweist, die bei Änderung des Betrachtungswinkels einen Farbkippeffekt aufweist.

Bei der in Fig. 6a gezeigten Variante sind die ersten und zweiten Codebereiche C1, C2 und entsprechend die ersten und zweiten Substanzen S1, S2, S21 in einer opaken, vorzugsweise schwarzen, Deckfarbschicht 21 eingebettet, die auf einer Trägerschicht 22 aufgebracht ist. Die Deckfarbschicht 21 wird als vorzugsweise möglichst dunkler Untergrund für die Flüssigkristallschicht 20 ausgeführt und besteht aus einer Farbe, die im Infraroten transparent ist, sodass das Absorptionsverhalten der Codebereiche C1, C2 im Infraroten, beispielsweise unter IR-Beleuchtung verifizierbar ist. Die Flüssigkristallschicht 20 ist beispielsweise mit Hilfe einer Druckfarbe auf Basis von flüssigkristallinen Pigmenten erzeugbar, wobei die Flüssigkristallschicht 20 für elektromagnetische Strahlung aus dem infraroten Spektralbereich transparent ist.

Fig. 6b zeigt eine Variante des in Fig. 6a illustrierten Ausführungsbeispiels, bei der die zweiten Codebereiche C2, die mit magnetisch nachweisbaren, zweiten und/oder weiteren zweiten Substanzen S2, S21 bedruckt sind, auf einer der Flüssigkristallschicht 20 abgewandten Seite der Trägerschicht 22 angeordnet sind.

Fig. 6c zeigt eine Variante des in Fig. 6a illustrierten Ausführungsbeispiels, bei der die ersten und die zweiten Codebereiche C1, C2, die mit im Infraroten absorbierenden ersten und zweiten Substanzen S2, S21 bedruckt sind, auf einer der Flüssigkristallschicht 20 abgewandten Seite der Trägerschicht 22 angeordnet sind.

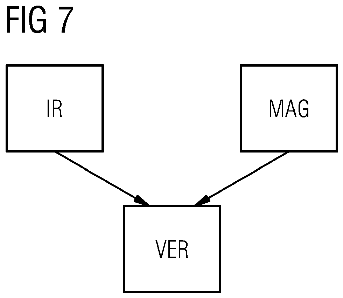

Fig. 7 illustriert ein Verfahren zur Echtheitsprüfung eines Sicherheitselements 10.

Zur Erfassung bzw. dem Nachweis der Verteilung der ersten und zweiten Substanzen in den ersten und zweiten Codebereichen ist zumindest eine Absorptionsmessung IR im infraroten Spektralbereich und eine Magnetfeldmessung MAG vorgesehen. Die Magnetfeldmessung bestimmt eine magnetische Codierung, die durch die Verteilung der zweiten Substanzen S2, S21 in den zweiten Codebereichen C2 charakterisiert ist. Anhand einer Erfassung einer Absorption im infraroten Spektralbereich wird zusätzlich eine IR-Codierung, die durch die Verteilung der ersten und zweiten Substanzen S1, S2, S21 in den ersten und zweiten Codebereichen C1, C2 charakterisiert ist, bestimmt. In einem anschließenden Verifizierungsschritt VER wird die Echtheit unter Berücksichtigung der IR-Codierung und der magnetischen Codierung überprüft.

In den obigen Beispielen wird gemäß besonderen Ausführungsvarianten jeweils eine räumliche Trennung der Codebereiche gezeigt. Alternativ können die Codebereiche auch nebeneinander (d.h. angrenzend) oder geringfügig überlappend angeordnet sein, sodass man optisch zunächst einen größeren Bit erkennt, welcher später mittels Magnetfeldmessung als schmalerer Bit erfasst wird. Gleichermaßen würde dies auch bei einem Code mit den verschiedenen Substanzen S1, S2, S21 und S3 unter IR-Betrachtung gelten. Ebenso ist es denkbar, die Codierung C1 und C2 so anzuordnen, dass die Bits der Substanzen S2 und S21 innerhalb der Bits der Substanz S1 liegen, also die Substanzen S2 und S21 auf der Substanz S1 aufgedruckt werden. Man erkennt zunächst optisch als auch unter IR-Betrachtung nur die Codierung C1. Die einzelnen Bits der Codierung C1 sind visuell größer als die Bits der Codierung C2. Dabei müssen die einzelnen Bits der Codierung C2 nicht unbedingt mittig innerhalb der Bits der Codierung C1 liegen, sondern können je nach Größe der Bits der Codierung C1 an unterschiedlichen Positionen aufgedruckt sein. Die Substanzen S1 und/oder S3 können auch negative Zeichen in Form von Texten oder Motive beinhalten, die die Codierung C1 bzw. C3 unter IR-Betrachtung nicht stören, die aber bei Betrachtung des Sicherheitselements im Durchlicht visuell erkennbar sind.

Anhand der Zeichnungen, die spezifische Ausführungsbeispiele der Erfindung illustrieren, wird die Erfindung oben beispielhaft erläutert. Diese Ausführungsbeispiele werden oben detailliert beschrieben und ermöglichen dem Fachmann die technische Umsetzung der Erfindung. Die beschriebenen Ausführungsformen schließen sich nicht gegenseitig aus, sondern ergänzen sich vielmehr. Insofern ist ein bestimmtes Merkmal, eine bestimmte Struktur oder eine bestimmte Eigenschaft, die im Zusammenhang mit einer Ausführungsform beschrieben wird, auch im Zusammenhang mit anderen Ausführungsformen umsetzbar, ohne vom Gegenstand der Erfindung abzuweichen. Ferner kann die Position oder Anordnung einzelner Elemente oder Schritte innerhalb der beschriebenen Ausführungsformen selbstverständlich modifiziert werden, ohne vom Gegenstand der Erfindung abzuweichen. Deshalb ist die Beschreibung der anliegenden Figuren nicht beschränkend zu verstehen, denn der Umfang der Erfindung wird ausschließlich durch die beigefügten Ansprüche definiert du umfasst auch Varianten und Äquivalente, die nicht ausdrücklich beschrieben werden.

## Patentansprüche

1. Sicherheitselement (10), vorzugsweise in Form eines Sicherheitsstreifens (10c), Sicherheitsfadens (10a, 10b) oder Sicherheitspatches (10d), mit einer maschinenlesbaren Codierung, die auf im infraroten Spektralbereich absorbierenden Substanzen basiert (S1, S2, S21), wobei die maschinenlesbare Codierung erste und zweite Codebereiche (C1, C2) umfasst, die voneinander räumlich getrennt angeordnet sind, **dadurch gekennzeichnet, dass** die im infraroten Spektralbereich absorbierenden Substanzen (S1, S2, S21) zumindest eine erste Substanz (S1) umfassen, die mittels Magnetfeldmessung nicht erfassbar ist, und zumindest eine zweite Substanz (S2, S21) umfassen, die mittels Magnetfeldmessung erfassbar ist, wobei die zumindest eine erste Substanz (S1) in zumindest einem der ersten Codebereiche (C1) und die zumindest eine zweite Substanz (S2, S21) in zumindest einem der zweiten Codebereiche (C2) eingebracht sind.

2. Sicherheitselement (10) nach Anspruch 1, **dadurch gekennzeichnet, dass** zumindest eine weitere zweite Substanz (S21), die mittels Magnetfeldmessung erfassbar ist, in zumindest einem der zweiten Codebereiche (C2) eingebracht ist, wobei die zumindest eine zweite Substanz (S2) und die zumindest eine weitere zweite Substanz (S21) sich hinsichtlich ihrer magnetischen Eigenschaften, insbesondere hinsichtlich ihrer Koerzitivität, unterscheiden.

3. Sicherheitselement (10) nach Anspruch 2, **dadurch gekennzeichnet, dass** die zumindest eine zweite Substanz (S2) und die zumindest eine weitere zweite Substanz (S21) in zumindest einem der zweiten Codebereiche (C2) überlagert, insbesondere als Gemisch (G), eingebracht sind.

4. Sicherheitselement (10) nach einem der vorhergehenden Ansprüche, **dadurch gekennzeichnet, dass** in jedem der ersten Codebereiche (C1) die zumindest eine erste Substanz (S1) oder eine der ersten Substanzen (S1) eingebracht ist.

5. Sicherheitselement (10) nach einem der vorhergehenden Ansprüche, **dadurch gekennzeichnet, dass** die ersten und zweiten Codebereiche (C1, C2) eine Information als Bits in der Art eines Barcodes kodieren.

6. Sicherheitselement (10) nach einem der vorhergehenden Ansprüche, **dadurch gekennzeichnet, dass** die ersten und/oder zweiten Codebereiche (C1, C2) visuell sichtbar angeordnet sind und die ersten, zweiten und/oder weiteren zweiten Substanzen (S1, S2, S21) visuell erfassbare, zu Buntfarben korrespondierende Farbeindrücke erzeugen.

7. Sicherheitselement (10) nach einem der vorhergehenden Ansprüche, **gekennzeichnet durch** eine zusätzliche, visuell erfassbare Codierung, welche auf zumindest einer dritten Substanz (S3) basiert, die im infraroten Spektralbereich transparent ist und einen visuell erfassbaren, zu einer Buntfarbe korrespondierenden Farbeindruck erzeugt, wobei die dritte Substanz (S3) in sichtbar angeordneten, dritten Codebereichen (C3) eingebracht ist, die von den ersten und zweiten Codebereichen (C1, C2) räumlich getrennt angeordnet sind.

8. Sicherheitselement (10) nach einem der vorhergehenden Ansprüche, **dadurch gekennzeichnet, dass** die ersten, zweiten und/oder dritten Codebereiche (C1, C2, C3) innerhalb des Sicherheitselements (10) von einer mikrooptischen Reliefanordnung (11), insbesondere von einer Mikrolinsenanordnung, eines optisch variablen Sicherheitsmerkmals überlagert angeordnet sind.

9. Sicherheitselement (10) nach einem Anspruch 8, **dadurch gekennzeichnet, dass** die die ersten, zweiten und/oder dritten Codebereiche (C1, C2, C3) derart angeordnet sind, dass diese von der mikrooptischen Reliefanordnung (11), insbesondere von der Mikrolinsenanordnung, als Teil eines optisch variablen Sicherheitsmerkmals abbildbar sind.

10. Sicherheitselement (10) nach einem der vorhergehenden Ansprüche, **dadurch gekennzeichnet, dass** die zweiten Codebereiche (C2) von einer opaken Farbschicht (D) überlagert sind, die im infraroten Spektralbereich transparent ist.

11. Sicherheitselement (10) nach einem der vorhergehenden Ansprüche, **dadurch gekennzeichnet, dass** die ersten und/oder zweiten Codebereiche (C1, C2) von einer Flüssigkristallschicht (20) eines optisch variablen Sicherheitsmerkmals überlagert sind.

12. Sicherheitselement (10) nach Anspruch 11, **dadurch gekennzeichnet, dass** die ersten und/oder zweiten Codebereiche (C1, C2) in einer opaken, insbesondere schwarzen, Deckfarbschicht (21) eingebettet sind, die von der Flüssigkristallschicht (20) überlagert ist.

13. Sicherheitselement (10) nach Anspruch 11, **gekennzeichnet durch** eine opake, insbesondere schwarze, Deckfarbschicht (21), die von der Flüssigkristallschicht (20) überlagert ist, und einer die Deckfarbschicht (21) tragenden Trägerschicht (22), auf der die ersten und zweiten Codebereiche (C1, C) aufgebracht sind.

14. Sicherheitselement (10) nach Anspruch 11, **gekennzeichnet durch** eine opake, insbesondere schwarze, Deckfarbschicht (21), die von der Flüssigkristallschicht (20) überlagert ist und in der die ersten Codebereiche (C1) eingebettet sind, und einer die Deckfarbschicht (21) tragenden Trägerschicht (22), auf der die zweiten Codebereiche (C2) aufgebracht sind.

15. Verfahren zur Echtheitsprüfung eines Sicherheitselements (10) nach einem der vorhergehenden Ansprüche, **dadurch gekennzeichnet, dass**
anhand einer Erfassung einer Absorption im infraroten Spektralbereich eine IR-Codierung bestimmt wird, die durch die Verteilung der ersten und zweiten Substanzen (S1, S2, S21) in den ersten und zweiten Codebereichen (C1, C2) charakterisiert ist; und
anhand einer Magnetfeldmessung eine magnetische Codierung bestimmt wird, die durch die Verteilung der zweiten Substanzen (S2, S21) in den zweiten Codebereichen (C2) charakterisiert ist,
wobei die Echtheit des Sicherheitselements (10) anhand der IR-Codierung und der magnetischen Codierung überprüft wird.
